# EUROPEAN PATENT APPLICATION

(11) **EP 4 481 104 A1**
(43) Date of publication of application: **25.12.2024**
(21) Application number: 23760370.9
(22) Date of filing: 22.02.2023
(51) Int. Cl.: D06F 58/24, D06F 58/20, D06F 58/26, B01D 53/26, D06F 58/50, D06F 58/46, D06F 34/26, D06F 103/30, D06F 105/32

(54) **CLOTHES TREATMENT APPARATUS**

(30) Priority: 22.02.2022 KR 20220023171; 22.02.2022 KR 20220023172; 22.02.2022 KR 20220023173
(71) Applicant: LG Electronics Inc., Yeongdeungpo-gu Seoul 07336 (KR)
(72) Inventor: LEE, Junhee, Seoul 08592 (KR); KIM, Doohyun, Seoul 08592 (KR); YONG, Ho, Seoul 08592 (KR); LEE, Gyudae, Seoul 08592 (KR)
(74) Representative: Vossius & Partner Patentanwälte Rechtsanwälte mbB
(86) International application number: PCT/KR2023/002509
(87) International publication number: WO 2023/163496

(57) **Abstract**

The present application provides a clothes treatment apparatus comprising: a drum for providing a space in which objects to be dried are accommodated; circulation flow path parts, which have an exhaust path for guiding air inside the drum to the outside of the drum, and a supply path for guiding the air inside the exhaust path to the drum; a heat exchange part, which has a circulation fan for moving the air along the circulation flow path parts, a heat absorption part for dehumidifying the air inside the circulation flow path parts, and a heating part for heating the air having passed through the heat absorption part; a condensate water removal part, which has a storage body in which a space separated from the circulation flow path parts is provided, and a moisture absorbent provided inside the storage body so as to absorb moisture; and a water collection part, which has a water collection body in which condensate water discharged from the heat absorption part is stored, and a water collection body drain pipe for guiding the condensate water of the water collection body to the storage body.

## Description

### TECHNICAL FIELD

The present disclosure relates to a clothing treatment apparatus.

### BACKGROUND

The term "clothing treatment apparatus" is a general term that refers to a washing machine for washing clothing (laundry items or drying items), a dryer for drying clothing, and an apparatus (refresher) that controls the temperature, humidity, and so on of a space to keep clothing in a spread-out state.

A washing machine typically includes a tub where water is stored, a washing drum provided inside the tub where clothes are stored, and a driver (washing driver) that rotates the washing drum. A dryer typically includes a drying drum where clothes are stored, a driver (drying driver) that rotates the drying drum, and a heat exchanger that supplies air to the drying drum to remove moisture from the clothes.

The washing driver generally includes a stator fixed to the tub to form a rotating magnetic field, a rotor that rotates due to the rotating magnetic field, and a rotating shaft that penetrates the tub to connect the washing drum and the rotor. On the other hand, the drying driver generally includes a motor, a pulley fixed to a rotating shaft of the motor, and a belt (power transmitter) that connects the rotational motion of the pulley to the drying drum.

The washing driver is configured such that the rotating shaft of the motor is directly connected to the washing drum and the rotor. For washing or spin-drying clothes, the washing driver needs to control the rotational speed of the washing drum to be high or change the rotational direction of the washing drum. When the rotating shaft of the motor is configured to directly connect the washing drum and the rotor, the rotational speed and rotation direction of the washing drum may be easily controlled.

Conventional drying drivers generally have a structure where a power transmitter such as a belt connects the drying drum to the rotating shaft of the motor. This is because a dryer does not typically need to maintain a high rotational speed of the drying drum or change the rotational direction of the drying drum frequently, and thus it is allowed to rotate the drying drum through a power transmitter such as a belt. However, if the rotational speed and direction of the drying drum is capable of being changed, it would be possible to control the movement of clothes inside the drying drum. This may lead to shortening the drying time of the dryer and improving the drying performance of the dryer (Korean Patent Application Publication No. 10-2020-0065931).

Conventional apparatuses equipped with drying functions dry clothes by executing the following processes: an exhaust process that discharges air from a space containing clothes, a heat exchange process that sequentially dehumidifies and heats the discharged air from the space containing the clothes, and a supply process that supplies high-temperature dry air back to the space containing the clothes.

Clothing treatment apparatuses that execute the aforementioned processes store condensate generated during the dehumidification process in a separate tank. Users need to empty the condensate stored in the tank once the operation of the clothing treatment apparatus is complete.

The supply process involves supplying air to the clothes through an inlet, and the exhaust process involves discharging the air through an outlet after exchanging heat with the clothes. In other words, for the execution of the aforementioned processes, the air needs to move from the inlet to the outlet. If the amount of clothing is large or if the pressure of the air supplied during the supply process increases (i.e., if the airflow supplied by a circulation fan increases), there may be a case where the clothing partially blocks the air outlet. If the clothing blocks the air outlet, the amount of air moving through a circulation path during the exhaust process decreases, which may lead to an increase in the drying time.

### DISCLOSURE

### TECHNICAL PROBLEM

An object of the present disclosure is to provide a clothing treatment apparatus capable of collecting condensate generated during the operation of a heat exchanger and removing the collected condensate and method for controlling the clothing treatment apparatus.

Another object of the present disclosure is to provide a clothing treatment apparatus capable of removing condensate collected through an absorbent and method for controlling the clothing treatment apparatus.

Another object of the present disclosure is to provide a clothing treatment apparatus capable of regenerating an absorbent by evaporating moisture absorbed by the absorbent and method for controlling the clothing treatment apparatus.

Another object of the present disclosure is to provide a clothing treatment apparatus capable of minimizing the possibility of an exhaust port being blocked by items to be dried (e.g., clothing) due to changes in the pressure in a space where the items to be dried are accommodated and method for controlling the clothing treatment apparatus.

A further object of the present disclosure is to provide a clothing treatment apparatus capable of adjusting the pressure in a space where items to be dried are accommodated.

### TECHNICAL SOLUTION

The present disclosure provides a clothing treatment apparatus. The clothing treatment apparatus includes: a drum providing a space for accommodating items to be dried; a circulation flow path including: an exhaust flow path configured to guide air inside the drum to an outside of the drum; and a supply flow path configured to guide air inside the exhaust flow path to the drum; a heat exchanger including: a circulation fan configured to move air along the circulation flow path; a heat absorber configured to dehumidify air inside the circulation flow path; and a heater configured to heat air passing through the heat absorber; a condensate remover including: a storage body providing a space separated from the circulation flow path; and an absorbent provided inside the storage body and configured to absorb moisture; and a water collector including: a water collection body configured to store condensate discharged from the heat absorber; and a water collection body drain pipe configured to guide the condensate in the water collection body to the storage body.

The clothing treatment apparatus may further include a regenerator configured to guide a portion of air passing through the heater to the storage body and remove the moisture absorbed by the absorbent.

The regenerator may include a hot air supply duct connecting the supply flow path and the storage body.

The clothing treatment apparatus may further include a valve configured to open and close the hot air supply duct.

The clothing treatment apparatus may further include: an exhaust port passing through one side of the storage body; and an exhaust fan configured to discharge air inside the storage body through the exhaust port.

The exhaust fan may be controlled to operate when the valve opens the hot air supply duct.

The clothing treatment apparatus may further include a drain port positioned at a point higher than a bottom surface of the water collection body and configured to enable natural drainage of condensate inside the circulation flow path to the water collection body.

The water collection body drain pipe may be configured to enable natural drainage of the condensate inside the water collection body to the storage body.

The bottom surface of the water collection body may be positioned at a point higher than a bottom surface of the storage body, and the water collection body drain pipe may be configured to connect the bottom surface of the water collection body to a side surface of the storage body.

The clothing treatment apparatus may further include a spray nozzle configured to spray the condensate stored in the water collection body onto an upper surface of the absorbent part.

The water collection body may be positioned on a side surface of the circulation flow path, and the storage body may be positioned below the circulation flow path.

The water collection body may be positioned below the circulation flow path, and the storage body may be positioned below the water collection body.

The storage body may further include: a storage space providing a space for storing the absorbent and forming a bottom surface of the storage body; a mounting space communicating with the storage space, wherein the water collection body drain pipe is fixed to the mounting space; and an inclined surface configured to guide condensate entering the mounting space into the storage space.

The present disclosure provides a clothing treatment apparatus. The clothing treatment apparatus includes: a drum providing a space for accommodating items to be dried; a circulation flow path including: an exhaust flow path configured to guide air inside the drum to an outside of the drum; and a supply flow path configured to guide air inside the exhaust duct to the drum; a heat exchanger including: a circulation fan configured to move air along the circulation flow path; a heat absorber configured to dehumidify air inside the circulation flow path; and a heater configured to heat air passing through the heat absorber; a condensate remover including: a storage body providing a space separated from the circulation flow path; and an absorbent provided inside the storage body and configured to absorb moisture; a water collector including: a water collection body configured to store condensate discharged from the heat absorber; and a water collection body drain pipe configured to guide the condensate in the water collection body to the storage body; and a regenerator configured to adjust a temperature inside the storage body and evaporate the condensate absorbed by the absorbent.

The regenerator may include a heater configured to adjust the temperature inside the storage body.

The heat exchanger may include: a refrigerant pipe providing a flow path for circulating a refrigerant, wherein the heat absorber and the heater are fixed to the refrigerant pipe; a compressor configured to circulate the refrigerant along the refrigerant pipe; and a pressure regulator provided in the refrigerant pipe and configured to adjust a pressure of the refrigerant moving from the heater to the heat absorber.

The regenerator may be provided as a part of the refrigerant pipe that guides the refrigerant discharged from the compressor to the heater.

The regenerator may be provided as a part of the refrigerant pipe that guides the refrigerant passing through the heater to the pressure regulator.

The clothing treatment apparatus may further include: an exhaust port passing through one side of the storage body; and an exhaust fan configured to discharge air inside the storage body through the exhaust port.

The clothing treatment apparatus may further include a drain port positioned at a point higher than a bottom surface of the water collection body and configured to enable natural drainage of condensate inside the circulation flow path to the water collection body.

The water collection body drain pipe may be configured to enable natural drainage of the condensate inside the water collection body to the storage body.

The bottom surface of the water collection body may be positioned at a point higher than a bottom surface of the storage body, and the water collection body drain pipe may be configured to connect the bottom surface of the water collection body to a side surface of the storage body.

The water collection body may be positioned on a side surface of the circulation flow path, and the storage body may be positioned below the circulation flow path.

The water collection body may be positioned below the circulation flow path, and the storage body may be positioned below the water collection body.

The storage body may further include: a storage space providing a space for storing the absorbent and forming a bottom surface of the storage body; a mounting space communicating with the storage space, wherein the water collection body drain pipe is fixed to the mounting space; and an inclined surface configured to guide condensate entering the mounting space into the storage body.

The present disclosure provides a clothing treatment apparatus. The clothing treatment apparatus includes: a drum including: a cylindrical drum body providing a space for accommodating items to be dried; and a drum having a drum inlet provided on one side of the drum body; a front panel including: a panel inlet; a drum support connecting the panel inlet and the drum inlet; and an exhaust port penetrating the drum support; a circulation flow path including: an exhaust flow path configured to guide air inside the drum to an outside of the drum; and a supply flow path configured to guide air inside the exhaust flow path to the drum; a heat exchanger including: a circulation fan configured to move air along the circulation flow path; a heat absorber configured to dehumidify air inside the circulation flow path; and a heater configured to heat air passing through the heat absorber; and a pressure controller configured to exhaust a portion of air inside the supply flow path and adjust an amount of air supplied to the drum.

The pressure controller may include: a control duct providing a space separated from the drum and the circulation flow path; and a guide duct configured to guide a portion of the air inside the supply flow path to the control duct.

The clothing treatment apparatus may further include a valve configured to control opening and closing of the guide duct.

The clothing treatment apparatus may further include an exhaust fan configured to control an airflow rate of air entering the control duct.

The clothing treatment apparatus may further include a pressure sensing unit provided on the front panel and configured to measure a pressure inside the drum. The valve may be configured to open the guide duct when the pressure measured by the pressure sensing unit is higher than or equal to a predetermined reference pressure.

If the pressure measured by the pressure sensing unit is higher than or equal to the reference pressure, the exhaust fan may be configured to exhaust air inside the control duct.

The clothing treatment apparatus may further include a pressure sensing unit configured to measure a pressure of air supplied to the exhaust flow path from the exhaust port. The valve may be configured to open the guide duct if the pressure measured by the pressure sensing unit is lower than a predetermined reference pressure.

If the pressure measured by the pressure sensing unit is lower than the reference pressure, the exhaust fan may be configured to exhaust the air inside the control duct.

The clothing treatment apparatus may further include a water collector configured to store condensate discharged from the heat absorber.

The water collector may be positioned on a side of the circulation flow path, and the control duct may be positioned below the circulation flow path.

### ADVANTAGEOUS EFFECTS

The present disclosure may provide a clothing treatment apparatus capable of collecting condensate generated during the operation of a heat exchanger and removing the collected condensate and method for controlling the clothing treatment apparatus.

The present disclosure may provide a clothing treatment apparatus capable of removing condensate collected through an absorbent and method for controlling the clothing treatment apparatus.

The present disclosure may provide a clothing treatment apparatus capable of regenerating an absorbent by evaporating moisture absorbed by the absorbent and method for controlling the clothing treatment apparatus.

The present disclosure may provide a clothing treatment apparatus capable of minimizing the possibility of an exhaust port being blocked by items to be dried due to changes in the pressure in a space where the items to be dried are accommodated and method for controlling the clothing treatment apparatus.

The present disclosure may provide a clothing treatment apparatus capable of adjusting the pressure in a space where items to be dried are accommodated.

### BRIEF DESCRIPTION OF THE DRAWINGS

FIGS. 1, 2, and 3 illustrate an example of a clothing treatment apparatus.
FIG. 4 illustrates an example of a power transmitter.
FIGS. 5, 6, 7, and 8 illustrate an example of a circulation flow path, a heat exchanger, and a water collector.
FIGS. 9 and 10 illustrate a first embodiment of a condensate remover and a regenerator.
FIG. 11 illustrates an example of a water collector.
FIGS. 12 to 14 illustrate a second embodiment of a condensate remover and a regenerator.
FIG. 15 illustrates a third embodiment of a condensate remover and a regenerator.
FIG. 16 illustrates a fourth embodiment of a condensate remover and a regenerator.
FIGS. 17 to 20 illustrate an example of a pressure controller for adjusting the pressure in a space where items to be dried are accommodated.

### DETAILED DESCRIPTION

Hereinafter, embodiments of a clothing treatment apparatus will be described in detail with reference to the accompanying drawings.

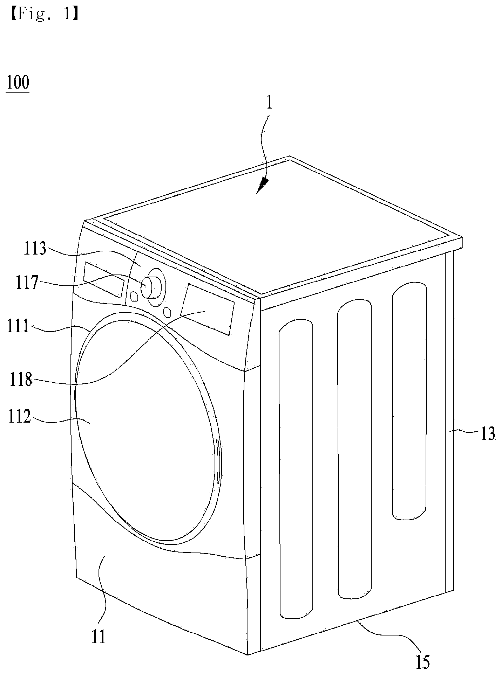

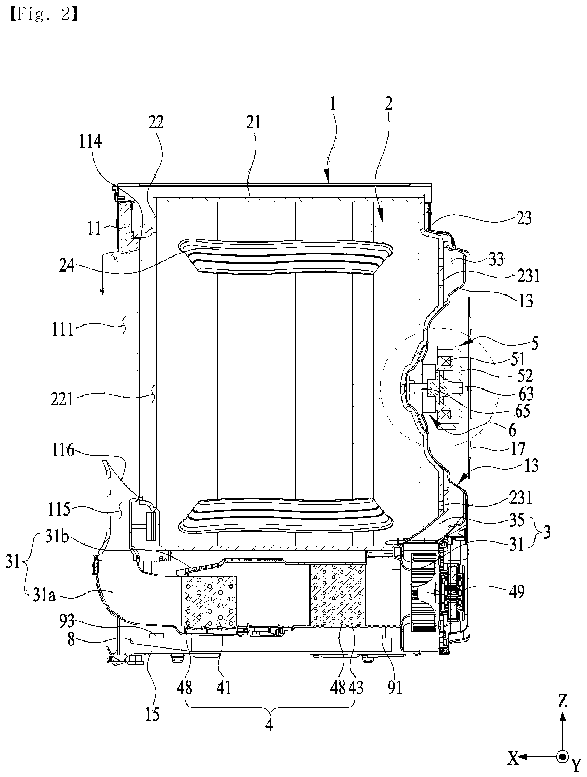

FIG. 1 illustrates an example of a clothing treatment apparatus 100. The clothing treatment apparatus 100 may include a cabinet 1, and a drum 2 rotatably disposed in the cabinet, which provides a space for storing clothes (items to be dried). As shown in FIG. 2, a circulation flow path 3 and a heat exchanger 4 may be provided in the cabinet 1 to supply high-temperature drying air (air at a temperature higher than the room temperature and with a higher degree of dryness than the room air) to the drum 2 to remove moisture from the clothes.

The circulation flow path 3 is a route that discharges air from inside the drum 2 to the outside of the drum 2 and then supplies air back to the drum 2. The heat exchanger 4 is a device (e.g., heat pump) that sequentially performs dehumidification and heating of the air flowing into the circulation flow path 3.

As shown in FIG. 1, the cabinet 1 may include a front panel 11 located at the front of the clothing treatment apparatus, a rear panel 13 forming the rear surface of the clothing treatment apparatus, and a base 15 forming the bottom surface of the clothing treatment apparatus.

The front panel 11 may include an inlet 111 that communicates with the drum 2. The inlet 111 may be opened and closed by a door 112.

The front panel 11 may include a control panel 113. The control panel 113 may be equipped with an input unit 117 for receiving control commands from the user, and a display 118 that outputs information such as control commands selectable by the user.

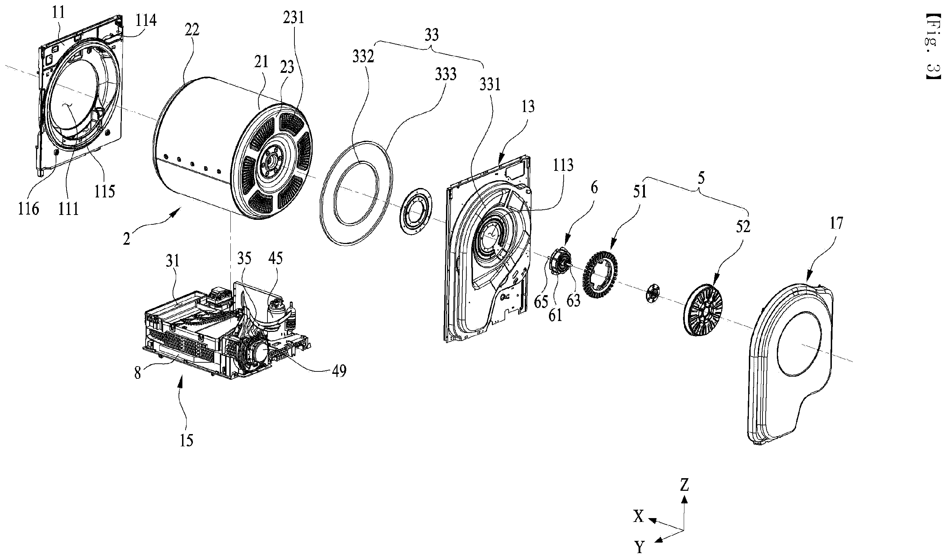

As shown in FIG. 3, the drum 2 may include a cylindrical drum body 21 with open front and rear surfaces, a front cover 22 forming the front surface of the drum body 21, and a rear cover 23 forming the rear surface of the drum body 21.

As shown in FIG. 2, the front cover 22 may include a drum inlet 221 that communicates the inside of the drum body 21 with the outside of the drum body 21, and the rear cover 23 may include an air inlet 231 that allows external air to enter the drum body 21.

The drum body 21 may further include a lifter 24. The lifter 24 is a means to cause clothing to repeatedly rise and fall inside the drum. The lifter 24 may be provided as a board that extends from the front cover 22 toward the rear cover 23 and protrudes from the drum body 21 toward the center of rotation of the drum 2 (protruding from the circumferential surface of the drum toward the center of rotation of the drum).

The drum 2 with the aforementioned structure may be connected to the front panel 11 through a drum support 114. The drum support 114 may be provided on the front panel 11 in a pipe shape such that the drum support 114 surrounds the inlet 111 and the free end thereof is inserted into the drum inlet 221. Thus, clothing entering through the inlet 111 may move to the drum body 21 through the drum support 114 and the drum inlet 221. The front panel 11 may further include a roller 116 that support the drum 2 in a rotatable manner.

As shown in FIG. 3, the drum 2 may be configured to rotate via a motor 5 and a power transmitter 6.

The motor 5 may include a stator 51, which is fixed to the rear panel 13 and forms a rotating magnetic field, and a rotor 52, which rotates due to the rotating magnetic field. The power transmitter 6 may be configured to transmit the rotational motion of the rotor 52 to the drum 2.

To prevent the motor 5 from being exposed to the outside and to minimize heat loss through the circulation flow path 3, a cover panel 17 may be fixed to the rear panel 13 to prevent the motor and a supply flow path 33 of the circulation flow path from being exposed to the outside.

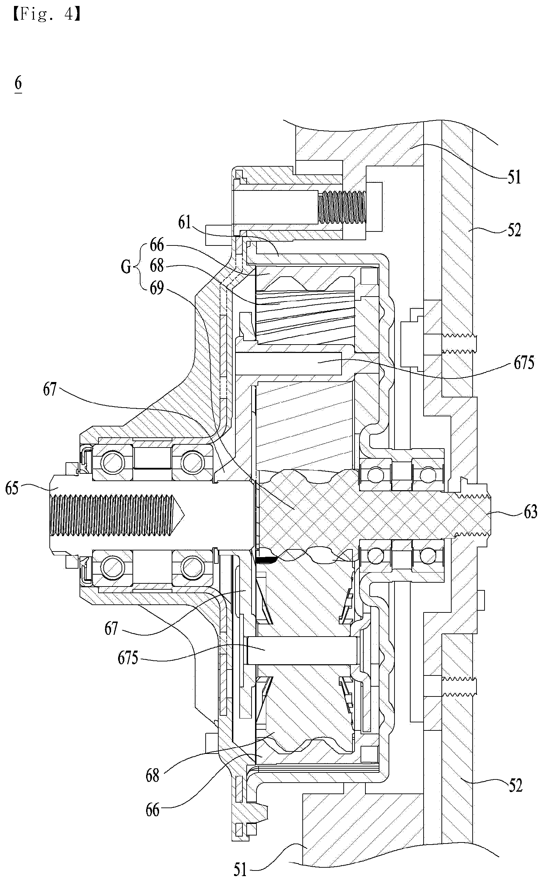

As shown in FIG. 4, the power transmitter 6 may include a housing 61 fixed to the rear panel 13, an input shaft 63 provided in the housing and connected to the rotor 52, an output shaft 65 provided in the housing and connected to the drum 2, and a gear unit G provided inside the housing 61 and configured to transmit the rotational motion of the input shaft 63 to the output shaft 65. The output shaft 65 may be inserted through a fixed panel through-hole 131 (see FIG. 3) provided in the rear panel 13 and fixed to the rear cover 23 of the drum.

The gear unit G may include a ring-shaped ring gear 66 fixed inside the housing 61, a driving gear 69 provided on the input shaft 63 and located at the center of the ring gear 66, and a driven gear 68 connecting the driving gear 69 and the ring gear 66.

The driven gear 68 may be rotatably fixed to a cage 67, which is rotatably provided inside the housing 61. Specifically, the cage 67 is provided in the form of a rotatable disk inside the housing 61, and multiple driven gears 68 may be rotatably fixed to a connection shaft 675 provided on the cage 67.

The output shaft 65 may be configured to pass through the housing 61 such that one end is fixed to the cage 67 and the other end is fixed to the rear cover 23.

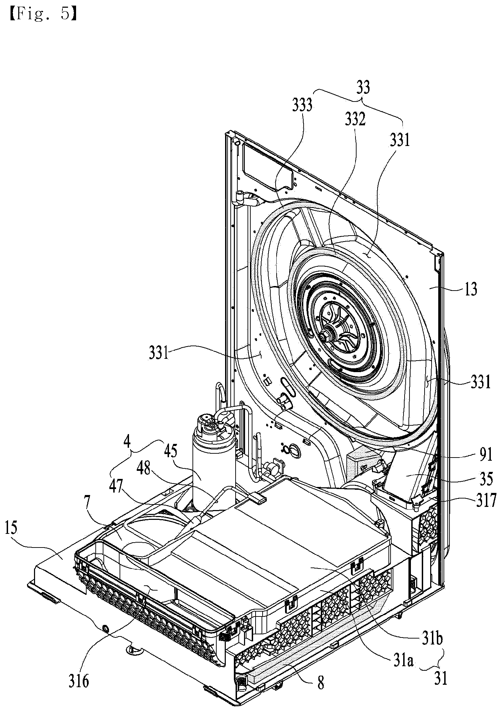

As shown in FIG. 5, the circulation flow path 3 may include an exhaust flow path 31 fixed to the base 15, a supply flow path 33 provided on the rear panel 13, and a connection flow path 35 connecting the exhaust flow path to the supply flow path.

The exhaust flow path 31 may be configured to guide air discharged from the front of the drum 2 (where the drum inlet is located) to the rear of the drum 2 (where the air inlet is located). The front panel 11 may include an exhaust port 115 (see FIG. 3) that discharges air from inside the drum body 21 to the cabinet 1. The exhaust flow path 31 may be connected to the exhaust port 115.

The exhaust flow path 31 may include an exhaust duct 31a fixed to the base 15 and a duct cover 31b that is detachably coupled to the exhaust duct 31a and forms the upper surface of the exhaust flow path 31. The inlet (cover through-hole 316) of the exhaust flow path 31 may be provided on the duct cover 31b, and the outlet 317 of the exhaust flow path 31 may be provided on the exhaust duct 31a.

The supply flow path 33 may include a supply duct 331 provided on the rear panel 13 and sealing parts 332 and 333 that guide air flowing into the supply duct 331 to the air inlet 231 provided in the drum.

If the air inlet 231 provided on the rear cover of the drum is in the shape of a ring surrounding the rotational center of the drum, the supply duct 331 may be configured in a ring shape that surrounds the air inlet 231.

In this case, the sealing parts may include a first sealing part 332 that surrounds the inner circumferential surface of a ring formed by the air inlets 231 and a second sealing part 333 that surrounds the outer circumferential surface of the ring formed by the air inlets 231. The first sealing part 332 and the second sealing part 333 may be fixed either to the rear cover 23 of the drum or the rear panel 13. FIG. 5 illustrates an example of the latter case.

The connection flow path 35 may connect the outlet 317 of the exhaust flow path to the supply duct 331. The connection flow path 35 may be provided in any shape that allows air inside the exhaust flow path 31 to be guided to the supply duct 331.

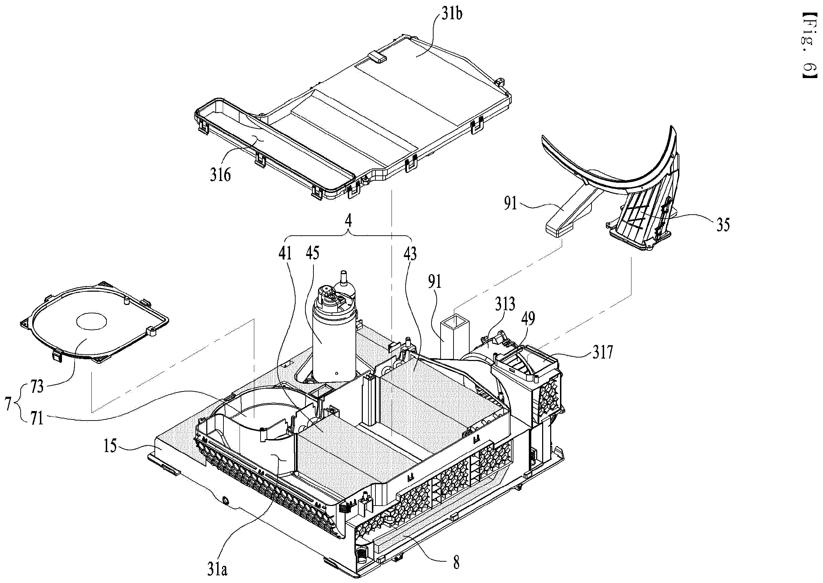

As shown in FIG. 6, the heat exchanger 4 includes a heat absorber 41 and a heater 43 provided inside the exhaust flow path 31.

The heat absorber 41 is a means to cool air flowing into the exhaust flow path 31 and remove moisture contained in the air (means for dehumidification), and the heater 43 is a means to heat air that passes through the heat absorber 41.

As long as the heat absorber 41 and the heater 43 are provided, the heat exchanger 4 may be configured with various devices. FIG. 6 illustrates an example in which the heat exchanger 4 is configured as a heat pump.

In this case, the heat exchanger 4 provides a flow path for circulating a refrigerant. The heat exchanger 4 may include a refrigerant pipe 48 to which the heat absorber 41 and the heater 43 are fixed, a compressor 45 that compresses the refrigerant and circulates the compressed refrigerant through the refrigerant pipe 48, and a pressure regulator 47 provided in the refrigerant pipe 48 to control the pressure of the refrigerant when the refrigerant is moving from the heater 43 towards the heat absorber 41.

The refrigerant passing through the heat absorber 41 may evaporate by absorbing heat from the air, and the refrigerant passing through the heater 43 may condense by releasing heat to the air. Therefore, the air passing through the heat absorber 41 is cooled (causing condensation), and the air passing through the heater 43 is heated.

The heat exchanger 4 may include a circulation fan 49 to ensure that air flows from the drum 2 into the exhaust flow path 31 and is then resupplied to the drum 2 through the supply flow path 33. The circulation fan 49 may be provided in the exhaust flow path 31 to be positioned between the heater 43 and the connection flow path 35.

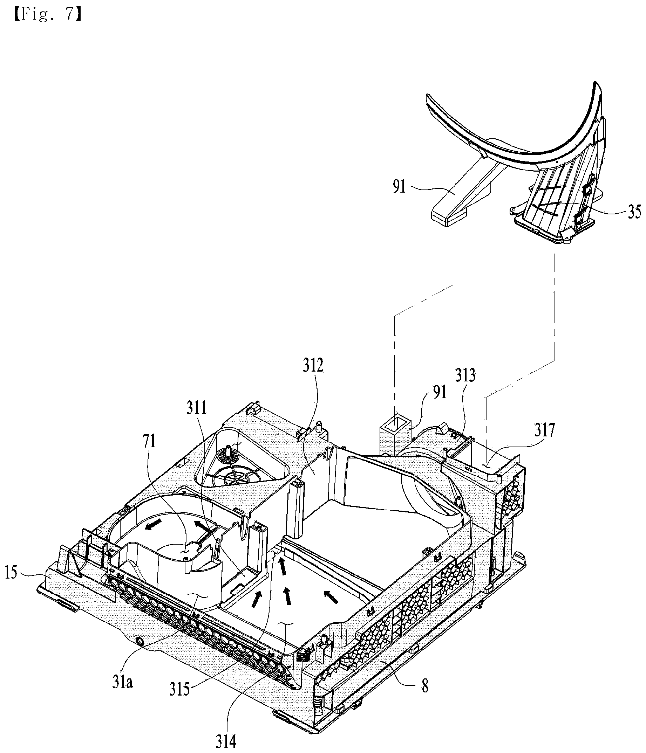

As shown in FIG. 7, the exhaust duct 31a may include a first mounting part 311 where the heat absorber 41 is fixed, a second mounting part 312 where the heater 43 is fixed, and a third mounting part 313 where the impeller of the circulation fan 49 is mounted. The first mounting part 311 may be positioned in the inlet direction of the exhaust flow path 31, the third mounting part 313 may be positioned in the outlet direction of the exhaust flow path 31, and the second mounting part 312 may be positioned between the first and third mounting parts.

The exhaust duct 31a may include a drain 315 that discharges condensate generated when air passes through the heat absorber 41 to the outside of the exhaust flow path 31. The drain 315 is configured as a hole penetrating the side or bottom surface of the exhaust duct 31a and is positioned between the first mounting part 311 and the second mounting part 312.

To guide the condensate inside the exhaust duct 31a to the drain 315, a sloped drain flow path 314 directed towards the drain 315 may be further provided on the bottom surface of the exhaust duct 31a c

The condensate discharged from the drain 315 may be stored in a water collector 7. As shown in FIG. 6, the water collector 7 may include a water collection body 71 fixed to the base 15 for storing water, and a water collection cover 73 fixed to the water collection body and form the upper surface of the water collector 7.

The water collection unit 7 may be configured as a chamber connected to the drain 315. For the condensate inside the exhaust flow path 31 to naturally drain into the water collection body 71, the drain 315 may be positioned higher than the bottom surface of the water collection body 71.

The condensate stored in the water collection body 71 may be directed to a condensate remover 8 equipped with an absorbent. The absorbent is a general term for materials that remove moisture from air by contacting with the air and is regenerated through heating such as silica gel and zeolite.

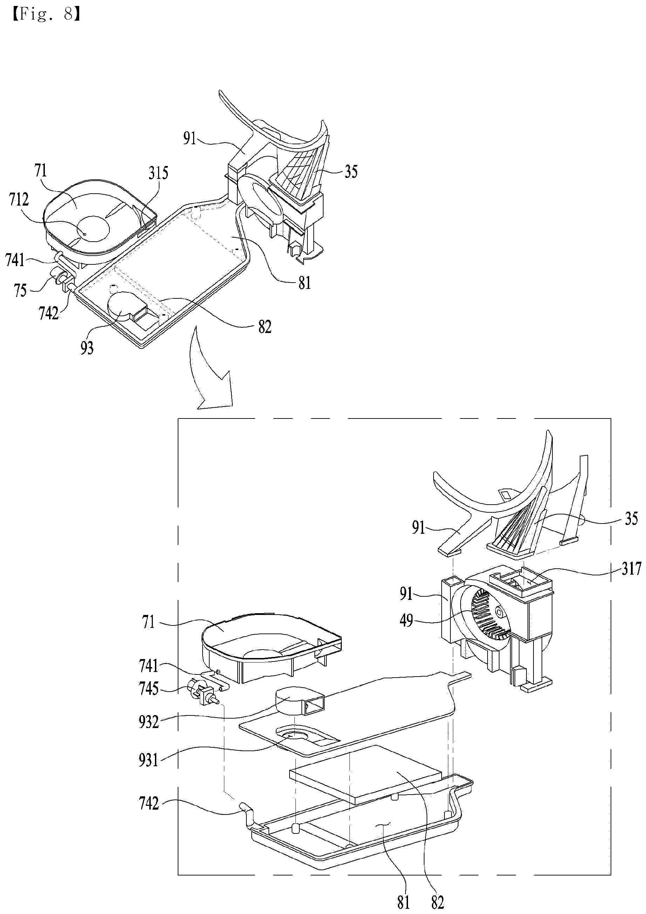

As shown in FIG. 8, the condensate remover 8 provides a space for storing the absorbent 82 and may be configured as a separate storage body 81, which is distinct from the circulation flow path 3 and the water collection body 71.

The condensate inside the water collection body 71 may be directed to the storage body 81 through water collection body drain pipes 741 and 742, and a drain valve 75 that controls the opening and closing of the water collection body drain pipes. The water collection body drain pipes may include a first connection pipe 741 that connects the water collection body 71 to the drain valve 75 and a second connection pipe 742 that connects the drain valve 75 to the storage body 81. A body outlet 712 may be provided on the bottom surface of the water collection body 71, and the first connection pipe 741 may be configured to connect the body outlet 712 to the drain valve 75. The reason for this is to minimize the possibility of condensate remaining in the water collection body 71.

The condensate inside the water collection body 71 may also be configured to naturally drain into the storage body 81. In this case, the bottom surface of the water collection body 71 is positioned higher than the bottom surface of the storage body 81. The water collection body drain pipes 741 and 742 may be configured to connect the bottom surface of the water collection body 71 to the side of the storage body 81.

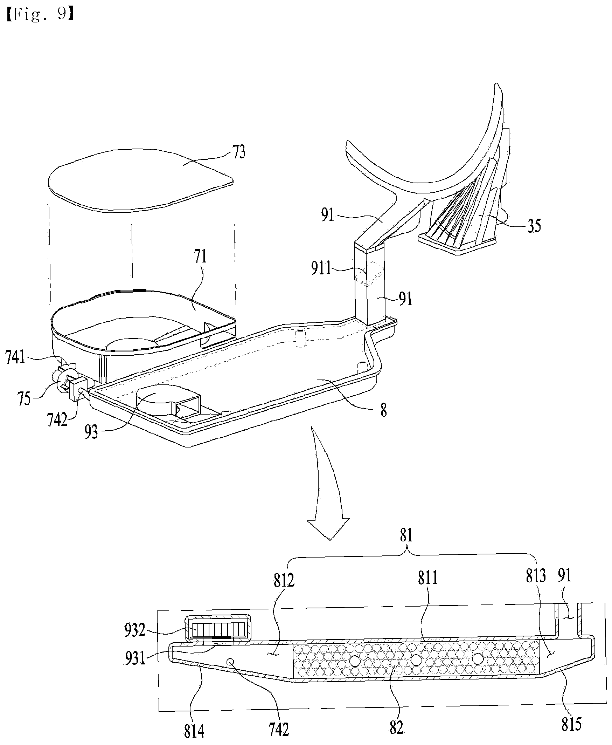

As shown in FIG. 9, the storage body 81 may include: a storage space 811 providing a space for storing the absorbent 82 and forming the bottom surface of the storage body 81, a mounting space 812 (first mounting space) communicating with the storage space 811 where the second connection pipe 742 is fixed, an inclined surface 814 (first inclined surface) guiding the condensate entering the first mounting space 812 into the storage space 811, and a second mounting space 813 connected to the storage space 811 and located on the opposite side of the first mounting space 812.

The absorbent 82 stored in the storage body 81 is regenerated through a regenerator 9. Regenerating the absorbent 82 refers to a process of separating moisture absorbed by the absorbent 82 from the absorbent 82. After regeneration, the absorbent 82 may be in a state where absorbent 82 is capable of absorbing moisture again. The regenerator 9 may be implemented as any device as long as the device is capable of controlling the temperature inside the storage body 81 to evaporate the condensate absorbed by the absorbent.

The regenerator 9 may be configured to remove the moisture contained in the absorbent 82 by guiding a portion of the air that has passed through the heater 43 to the storage body 81. Specifically, the regenerator 9 may be configured as a hot air supply duct 91 that connects the supply flow path 33 and the storage body 81. The hot air supply duct 91 may be configured as a flow path that connects the connection flow path 35 and the storage body 81.

To ensure that hot air is supplied to the storage body 81 only when the regeneration of the absorbent 82 is needed, the regenerator 9 may further include a valve 911 that controls the opening and closing of the hot air supply duct 91.

The hot air supply duct 91 may be connected to the storage space 811 of the storage body through the second mounting space 813. To facilitate the movement of air from the second mounting space 813 to the storage space 811, a second inclined surface 815 that guides the air to the storage space 811 may be provided in the second mounting space 813.

To shorten the regeneration time of the absorbent 82, the regenerator 9 may further include an exhaust unit 93 that discharges the air inside the storage body 81 to the outside of the storage body 81.

The exhaust unit 93 may include an exhaust port 931 that passes through one side of the storage body 81, and an exhaust fan 932 that discharges the air inside the storage body 81 through the exhaust port 931.

For the regeneration of the absorbent 82, the valve 911 and the exhaust fan 932 may be controlled to operate simultaneously. However, it is not necessary for the valve 911 and the exhaust fan 932 to operate simultaneously during the regeneration of the absorbent 82. That is, during the regeneration of the absorbent 82, a controller (not shown) of the clothing treatment apparatus may either operate only the valve 911 (opening the hot air supply duct while the exhaust fan is not operating) or operate only the exhaust fan 932 (operating the exhaust fan while the hot air supply duct is closed).

If the absorbent 82 is regenerated solely by controlling the valve 911, the operation of the valve 911 and the operation of the heat exchanger 4 need be controlled to be interlocked (a time period during which the valve opens the hot air supply duct and a time period during which the heat exchanger operates should be controlled to overlap with each other). However, if only the exhaust fan 32 operates, the controller may execute the regeneration process of the absorbent 82 regardless of whether the heat exchanger 4 is operating.

To minimize the space required for installing the circulation flow path 3, the water collector 7, and the condensate controller 8, the water collection body 71 may be positioned on the side surface of the exhaust flow path 31, and the storage body 81 may be positioned below the exhaust flow path 31. Contrary to what is shown in the drawings, the water collection body 71 may also be positioned below the exhaust flow path 31, and the storage body 81 may be positioned below the water collection body 71.

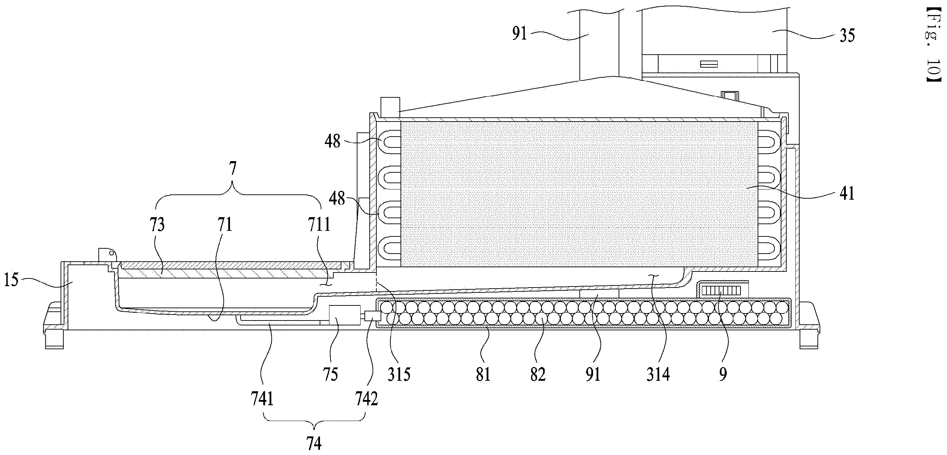

As shown in FIG. 10, in the clothing treatment apparatus 100 with the aforementioned structure, the condensate generated during the operation of the heat exchanger 4 moves from the circulation flow path 3 to the water collector 7. The condensate inside the water collector 7 moves to the storage body 81 (natural drainage) when the drain valve 75 opens the water collection body drain pipes 741 and 742, and the condensate supplied to the storage body 81 is removed by the absorbent 82. The condensate absorbed by the absorbent 82 is removed from the absorbent 82 during the operation of the regenerator 9.

Therefore, the clothing treatment apparatus 100 with the aforementioned structure does not require a process for storing the condensate collected in the water collector 7 in a separate tank and a process for the user to discard the water stored in the tank after the operation of the heat exchanger is complete.

Additionally, the clothing treatment apparatus 100 with the aforementioned structure may prevent condensate from remaining in the water collection body 71 or the storage body 81 or minimize the amount of condensate remaining in the water collection body 71 or the storage body 81. Therefore, the clothing treatment apparatus 100 may also minimize the potential for hygiene-related issues that may arise from condensate being stored inside the apparatus.

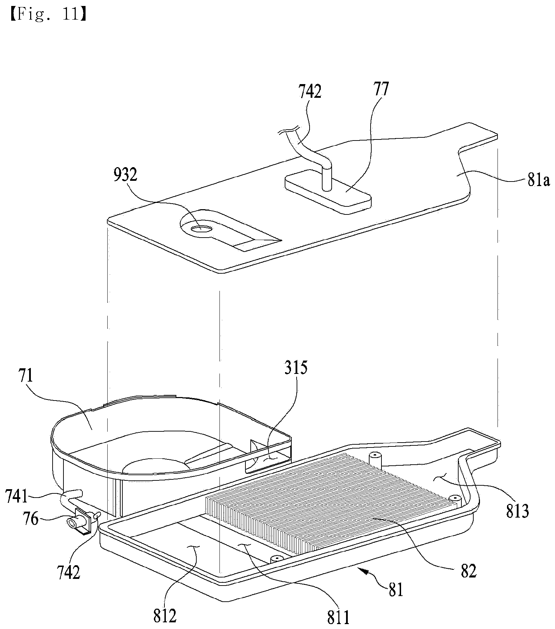

FIG. 11 illustrates another embodiment of the water collector 7. The water collector 7 according to this embodiment may shorten the condensate removal time and efficiently use the absorbent by directly spraying condensate onto the top of the absorbent 82.

The water collector 7 in FIG. 11 includes a water collection body 71 for storing condensate flowing into the drain 315, water collection body drain pipes 741 and 742 that guide the condensate stored in the water collection body 71 to the storage body 81, and a drain pump 76 that supplies the condensate to the spray nozzle 77.

The spray nozzle 77 may be fixed to a cover 81a of the storage body and configured to spray condensate onto an upper part of the absorbent 82. Multiple spray nozzles may be provided.

The drain pump 76 may be connected to the water collection body 71 through the first connection pipe 741 and connected to the spray nozzle 77 through the second connection pipe 742.

The water collector 7 shown in FIG. 9 supplies condensate to one side surface of the absorbent and thus has a structure where the condensate is absorbed first from the absorbent located near the second connection pipe 742. Therefore, in the embodiment of FIG. 9, the absorption time of the condensate may increase, and only a part of the absorbent 82 may perform the function of absorbing the condensate. However, if the water collector 7 is configured to spray the condensate onto the top of the absorbent 82 through the drain pump 76 and the spray nozzle 77 as shown in FIG. 11, it may overcome the drawbacks that may occur in the embodiment of FIG. 9.

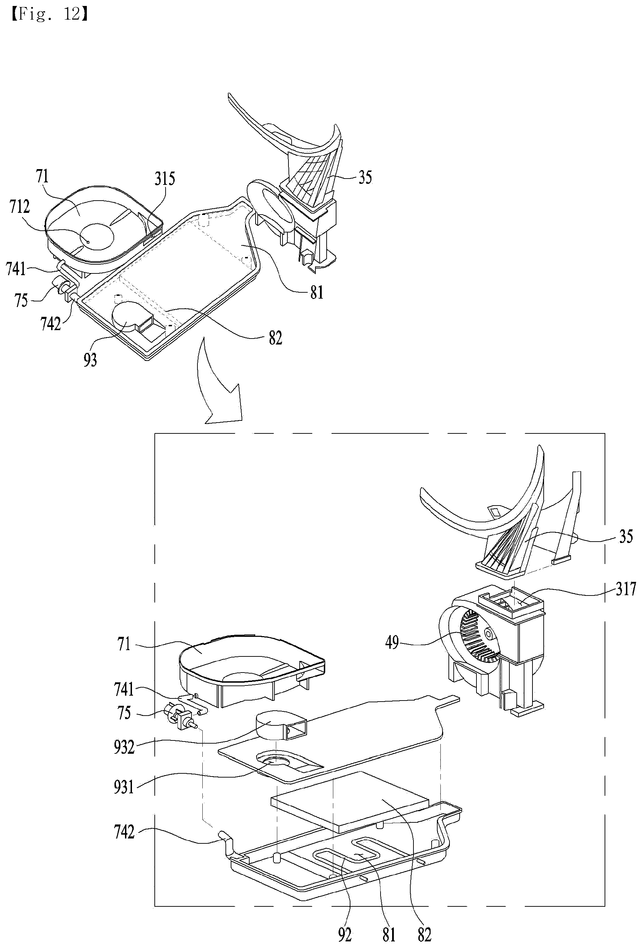

FIGS. 12 to 14 illustrate other embodiments of the condensate remover and the regenerator. The embodiment shown in FIG. 12 is distinguished from the embodiment in FIG. 9 in that the hot air supply duct 91 is not needed and the regenerator 9 is a heater 92.

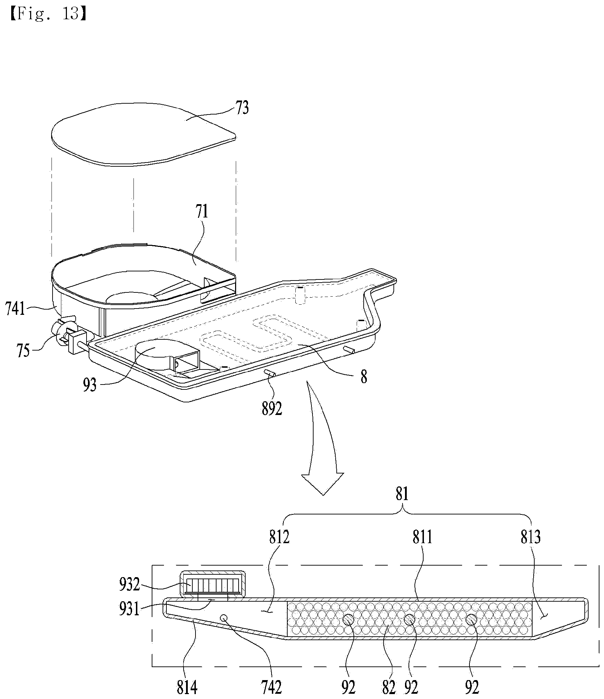

The heater 92 may be configured to heat air inside the storage body 81 (the heater is configured not to be in contact with the absorbent). Alternatively, as shown in FIG. 13, the heater 92 may be configured to directly heat the absorbent 82 (the heater is configured to be in contact with the absorbent).

For the regeneration of the absorbent 82, the heater 92 and the exhaust fan 932 may be controlled to operate simultaneously. However, it is not necessary for the heater 92 and the exhaust fan 932 to operate simultaneously during the regeneration of the absorbent 82. That is, during the regeneration of the absorbent 82, the controller (not shown) of the clothing treatment apparatus may operate only the heater 92 or only the exhaust fan 932.

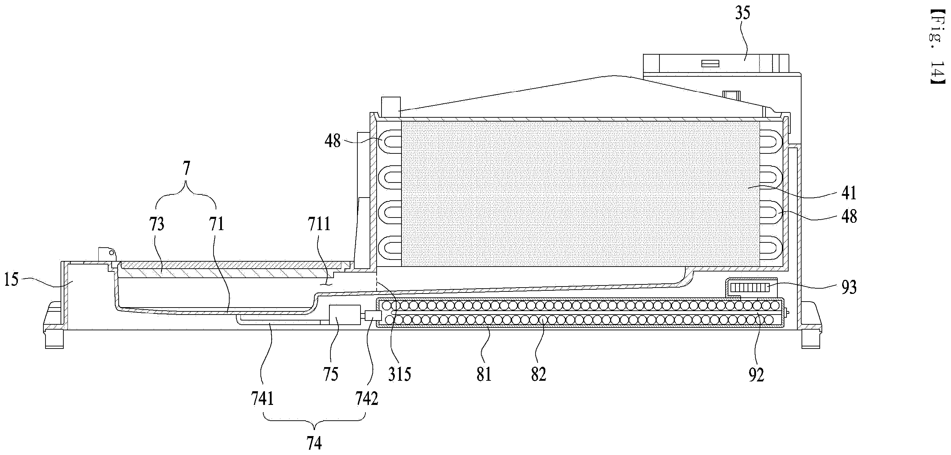

As shown in FIG. 14, in the clothing treatment apparatus 100 with the aforementioned structure, during the operation of the heat exchanger 4, condensate discharged from the heat absorber 41 moves to the water collector 71 through the circulation flow path 3, the condensate inside the water collector 7 moves to the storage body 81 (natural drainage) when the drain valve 75 opens the water collection body drain pipes 741 and 742, and the condensate supplied to the storage body 81 is removed by the absorbent 82. The condensate absorbed by the absorbent 82 is removed from the absorbent 82 during the operation of the regenerator 9.

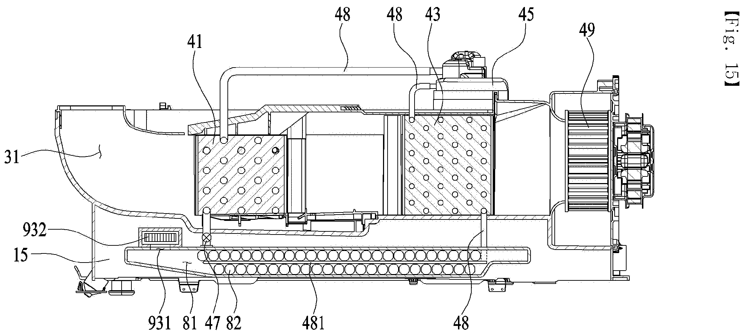

FIG. 15 illustrates another embodiment of the regenerator 9. In the embodiment in FIG. 15, a part of the refrigerant pipe 48 is configured as the regenerator 9.

That is, in the embodiment of FIG. 15, the regenerator 9 may be configured as a portion 481 of the refrigerant pipe 48 that guides the refrigerant, which has passed through the heater 43, to the pressure regulator 47. Contrary to what is shown in FIG. 15, the regenerator 9 may also be configured as a partial refrigerant pipe that guides the refrigerant discharged from the compressor 45 to the heater 43. The condensate remover 8 provided in the embodiment of FIG. 15 may also include the exhaust unit 93 that discharges air inside the storage body 81 to the outside of the storage body 81.

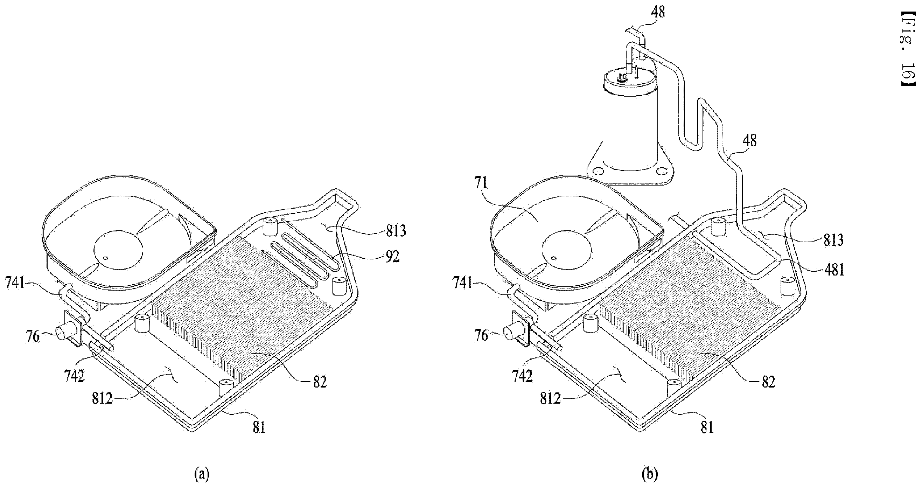

FIG. 16 illustrates another embodiment of the regenerator 9. In FIG. 16(a), the heater 92 is positioned in the second mounting space 813, while in FIG. 16(b), the portion 481 of the refrigerant pipe is positioned in the second mounting space 813.

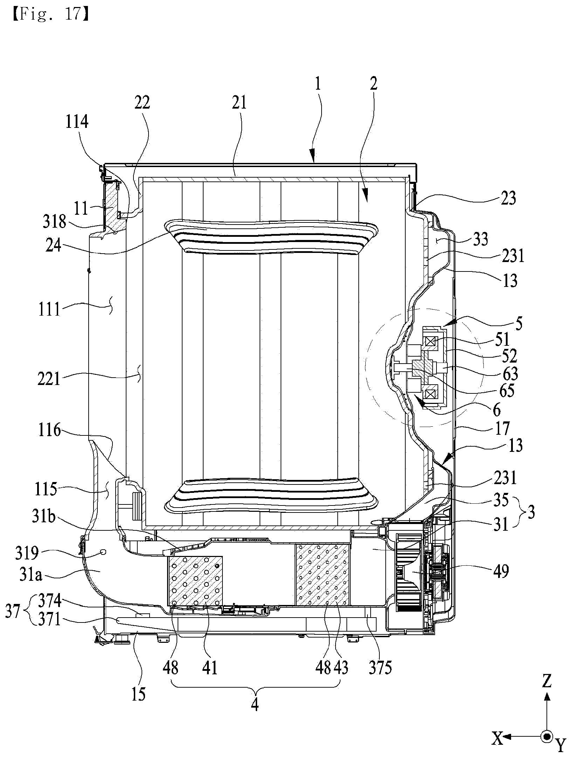

The clothing treatment apparatus of FIG. 17 is similar to the above-described embodiments in that the clothing treatment apparatus includes the cabinet 1, the drum 2, the circulation flow path 3, the heat exchanger 4, the motor 5, the power transmitter 6, and the water collector 7. However, the clothing treatment apparatus of FIG. 17 is distinguished from the above-described embodiments in that the clothing treatment apparatus includes pressure sensing units 318 and 319 and a pressure controller 37.

The aforementioned clothing treatment apparatus 100 dries clothes through a hot air supply process, which involves operating the heat exchanger 4 to supply air to the drum. During the hot air supply process, the drum 2 may be controlled to rotate.

In the hot air supply process, air moves from the air inlet 231 provided in the rear cover of the drum towards the exhaust port 115 provided in the front panel 11. If the amount of clothing placed in the drum 2 is large or if the pressure of air supplied to the drum 2 through the circulation fan 49 increases, there is a higher likelihood that the clothing may block the exhaust port 115. This is because the clothing inside the drum tends to move towards the front cover 22 where the exhaust port 115 is located.

If the exhaust port 115 is blocked by the clothing, the amount of air circulating along the circulation flow path 3 decreases, which may result in an increase in the drying time.

To solve the aforementioned problem, the pressure controller 37 may include a pressure controller 9 that adjusts the amount of air supplied to the drum 2 by exhausting some of the air inside the supply flow path 33.

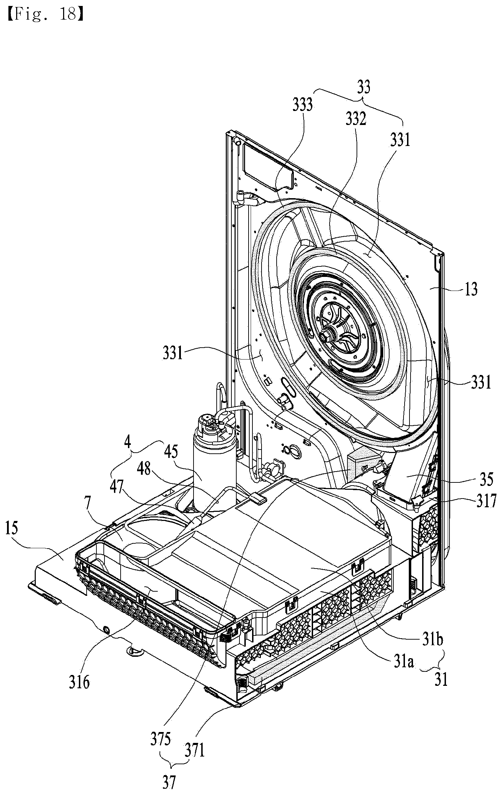

As shown in FIG. 18, the pressure controller 37 may include a control duct 371 that forms a flow path separate from the drum 2 and the circulation flow path 3 and a guide duct 375 that directs some of the air inside the supply flow path 33 to the control duct 371.

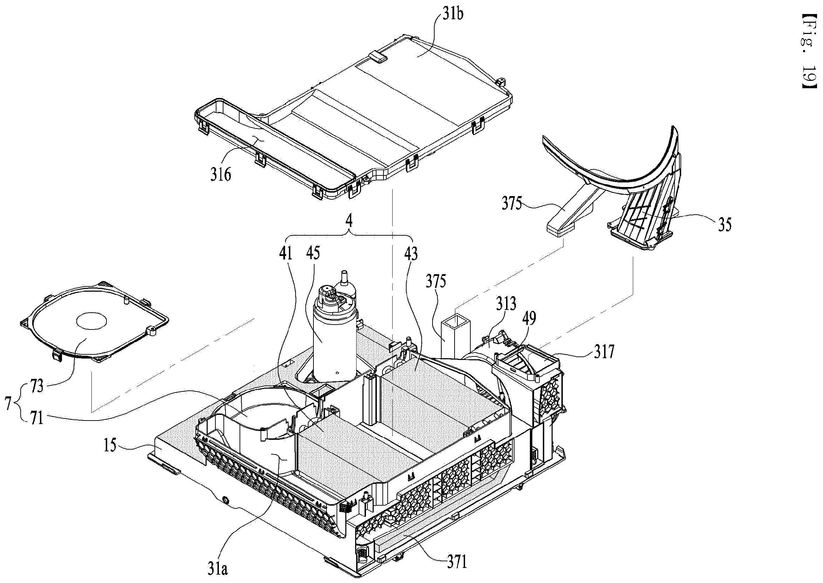

To minimize the volume of the clothing treatment apparatus 100, the water collection body 71 may be positioned on the side surface of the circulation flow path 3, and the control duct 371 may be positioned at the bottom of the circulation flow path 3 as shown in FIG. 19.

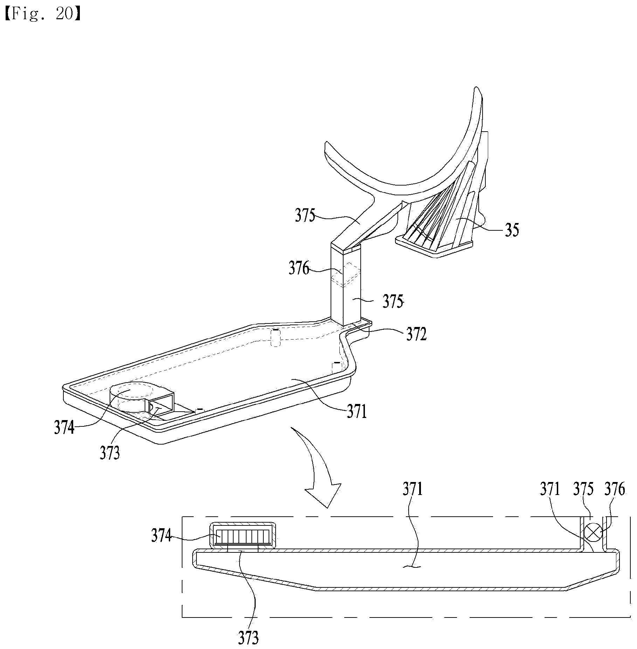

As shown in FIG. 20, the pressure controller 37 may include a valve 376 that controls the opening and closing of the guide duct 375. The reason for this is to open the guide duct 375 only when the pressure inside the drum 2 increases.

The valve 376 may be configured to control the opening and closing of the guide duct 375 based on the pressure measured by the pressure sensing units 318 and 319.

As shown in FIG. 17, the pressure sensing units 318 and 319 may be configured to detect the pressure inside the drum 2 or the pressure inside the exhaust flow path 31.

The pressure sensing unit 318 that detects the pressure inside the drum 2 may be provided on the front panel 11. If the pressure measured by the pressure sensing unit 318 is higher than or equal to a predetermined reference pressure, the valve 376 may open the guide duct 375 (if the exhaust port is blocked by clothing, the pressure inside the drum increases).

The pressure sensing unit 319 that detects the pressure of the exhaust flow path 31 may be configured to detect the pressure of air flowing into the cover through-hole 316 (the inlet of the exhaust flow path). In this case, the valve 376 may be controlled to open the guide duct 375 if the pressure measured by the pressure sensing unit 319 is determined to be lower than the reference pressure (if the exhaust port is blocked by clothing, the pressure inside the circulation flow path decreases).

In addition, the pressure controller 37 may further include an exhaust fan 374 that adjusts the amount of air flowing into the control duct 371 (or controls the airflow rate). As shown in FIG. 20, the control duct 371 may include a duct inlet 372 and a duct outlet 373.

The duct inlet 372 may be provided as a hole that allows air supplied from the guide duct 375 to flow into the control duct 371, and the duct outlet 373 may be provided as a hole that discharges the air inside the control duct 371 into the cabinet 1. The exhaust fan 374 may be fixed to the control duct 371 to adjust the airflow rate of air discharged from the duct outlet 373.

If the pressure sensing unit is provided as a sensor 318 that detects the pressure inside the drum, the exhaust fan 374 may be controlled to operate when the pressure measured by the pressure sensing unit 318 exceeds the reference pressure.

Additionally, if the pressure measured by the pressure sensing unit 318 is determined to be higher than or equal to the reference pressure, the controller (not shown) may execute a process for dispersing the clothing inside the drum 2 by increasing the rotation speed of the drum 2, decreasing the rotation speed, or alternating between increasing and decreasing the rotation speed.

If the pressure sensing unit is provided as a sensor 319 that detects the pressure inside the exhaust flow path 31, the exhaust fan 374 may be controlled to operate (exhaust air from the control duct) when the pressure measured by the pressure sensor 319 is lower than the reference pressure.

Additionally, if the pressure measured by the pressure sensing unit 319 is determined to be lower than the reference pressure, the controller (not shown) may execute a process for dispersing the clothing inside the drum 2 by increasing the rotation speed of the drum 2, decreasing the rotation speed, or alternating between increasing and decreasing the rotation speed.

Therefore, the above-described embodiment may not only adjust the pressure in a space where clothing is accommodated but also minimize the issue of the exhaust port 115 being blocked due to changes in the pressure in the space where the clothing is accommodated.

The above-described clothing treatment apparatus and control method may be implemented and modified in various forms, and thus the scope of the present disclosure is not limited to the above-described embodiments.

## Claims

1. A clothing treatment apparatus comprising:
a drum providing a space for accommodating items to be dried;
a circulation flow path comprising: an exhaust flow path configured to guide air inside the drum to an outside of the drum; and a supply flow path configured to guide air inside the exhaust flow path to the drum;
a heat exchanger comprising: a circulation fan configured to move air along the circulation flow path; a heat absorber configured to dehumidify air inside the circulation flow path; and a heater configured to heat air passing through the heat absorber;
a condensate remover comprising: a storage body providing a space separated from the circulation flow path; and an absorbent provided inside the storage body and configured to absorb moisture; and
a water collector comprising: a water collection body configured to store condensate discharged from the heat absorber; and a water collection body drain pipe configured to guide the condensate in the water collection body to the storage body.

2. The clothing treatment apparatus of claim 1, further comprising a regenerator configured to guide a portion of air passing through the heater to the storage body and remove the moisture absorbed by the absorbent.

3. The clothing treatment apparatus of claim 2, wherein the regenerator comprises a hot air supply duct connecting the supply flow path and the storage body.

4. The clothing treatment apparatus of claim 3, further comprising a valve configured to open and close the hot air supply duct.

5. The clothing treatment apparatus of claim 3, further comprising:
an exhaust port passing through one side of the storage body; and
an exhaust fan configured to discharge air inside the storage body through the exhaust port.

6. The clothing treatment apparatus of claim 5, wherein the exhaust fan is controlled to operate based on that the valve opens the hot air supply duct.

7. The clothing treatment apparatus of any one of claims 1 to 6, further comprising a drain port positioned at a point higher than a bottom surface of the water collection body and configured to enable natural drainage of condensate inside the circulation flow path to the water collection body.

8. The clothing treatment apparatus of claim 7, wherein the water collection body drain pipe is configured to enable natural drainage of the condensate inside the water collection body to the storage body.

9. The clothing treatment apparatus of claim 8, wherein the bottom surface of the water collection body is positioned at a point higher than a bottom surface of the storage body, and
wherein the water collection body drain pipe is configured to connect the bottom surface of the water collection body to a side surface of the storage body.

10. The clothing treatment apparatus of claim 7, further comprising
a spray nozzle configured to spray the condensate stored in the water collection body onto an upper surface of the absorbent part.

11. The clothing treatment apparatus of claim 7, wherein the water collection body is positioned on a side surface of the circulation flow path, and
wherein the storage body is positioned below the circulation flow path.

12. The clothing treatment apparatus of claim 7, wherein the water collection body is positioned below the circulation flow path, and
wherein the storage body is positioned below the water collection body.

13. The clothing treatment apparatus of claim 7, wherein the storage body further comprises:
a storage space providing a space for storing the absorbent and forming a bottom surface of the storage body;
a mounting space communicating with the storage space, wherein the water collection body drain pipe is fixed to the mounting space; and
an inclined surface configured to guide condensate entering the mounting space into the storage space.
